# EUROPEAN PATENT APPLICATION

(11) **EP 0 913 710 A2**
(43) Date of publication of application: **06.05.1999**
(21) Application number: 98118777.6
(22) Date of filing: 05.10.1998
(51) Int. Cl.: G01V 8/12

(54) **Optoelectronic intangible barrier with automatic regulation of the trigger threshold**

(30) Priority: 31.10.1997 IT MI972447
(71) Applicant: Barbuti, Ottorino, CH-6900 Lugano-Cassarate (CH)
(72) Inventor: Barbuti, Ottorino, CH-6900 Lugano-Cassarate (CH)
(74) Representative: Mayer, Hans Benno, Dipl.-Ing.

(57) **Abstract**

Optoelectronic barrier for accident prevention operating by interruption of rays, which is integrated with an automatic calibration system such that the level of irradiated power indicated by a "display" is set at the lower limit of the alarm trigger threshold appropriate to the predetermined distance between TX and RX. The self-calibration takes place upon first activation and upon each reactivation and can be corrected manually by a predetermined amount. The automatic system is implemented on the same card of the section TX or RX, while, in the case of barriers which have already been constructed and equipped with calibration which can be regulated manually, insertion is effected in the central control and control unit along with the numerical display and along with the various components for the accessory surfaces, this central unit forming an integral part of the sections RX - TX, because it is connected to these and essential to the operation of the assembly for a degree of security of level 4.

## Description

The present industrial invention relates to an optoelectronic barrier, specifically for accident prevention, comprising at least one emitter of infrared radiations which is provided in a transmitting unit TX, at least one sensor to detect such radiations in a receiving unit RX and a central unit, which is electrically connected to both, containing the electronic circuits for the management of the principal functions relating to safety. Optoelectronic barriers are already known which are in most cases mounted in front of the hazardous elements of machinery or sets of machines for the purpose of stopping any movement thereof in the course of the occasional intrusion by the human body and by the limbs thereof beyond the protective screen of rays existing between the section RX and the section TX. In order for these to act by halting the hazardous movement, at least one of the beams of rays must be obstructed fully throughout its diameter at some point of its path.

In the present state of the design art, various spatial conformations of the optoelectronic elements have been implemented but, unfortunately, in all of them there is the possibility of the occurrence of the disadvantage of the replacement of the beams of direct rays by rays contained within the halos which are dispersed and possibly reflected by bright surfaces close to the zone to be isolated.

Such reflections may accordingly cause the hazardous movement to be maintained notwithstanding the fact that the corresponding direct rays are interrupted by bodies which have intruded, thus giving rise to a hazardous condition.

This happens because any beam of rays which is produced by any emitter is not an infinitely thin straight line but, rather, is constituted by an infinity of elementary rays which are radiated in the form of a cone and are surrounded by a large number of "spurious" rays which have deviated in disordered fashion from the principal direction. Such inevitable dispersions are principally caused by the imperfection of the lenses used to converge the emission of any radiator into a single direction and by the fact that the source is not an infinitely small point but is of finite dimensions, this being further aggravated by the existence of a central zone of welding of the positive rheophore onto the emitter crystal, which is therefore inactive and is called a "black hole".

On the other hand, in front of the emitters the receiving elements cannot, for the same and other reasons, have a very restricted angle of view. All this makes it impossible to construct beams of rays which are ordered and parallel without any halo of rays dispersed around these and to eliminate those tedious micrometre adjustments of the optical structures, which have to be carried out one at a time for each pair of emitter-receiver elements.

The disadvantage of the presence of disturbing "halos" in numbers which are the larger, the greater is the radiation power, is inevitably aggravated by the custom on the part of the designers of presetting each barrier pair for the maximum obtainable range, that is to say with the radiators set for the maximum irradiated power and with the receivers set to the maximum sensitivity, even at the design phase. These two factors contribute in drastic fashion to the occurrence of the dis-advantage of the disturbing reflections.

The second disadvantage which occurs with the standard barriers is that of the surreptitious influence which a high power transmitter TX may exercise on the receiver RX of a second barrier mounted on a machine situated in the vicinity and collinear therewith.

The calibration system which is implemented by the present invention is that dependent upon the minimum power which is strictly essential to cover the distance appropriate to each individual installation and operates in such a way that even an attenuation of just 5% of the direct beam of rays would cause the reaction of the barrier in the sense that would cause the triggering of the alarm and thus the machine to halt.

It is intuitive to note that under these conditions the dispersed rays which have already been attenuated by a good 20%, because they are out of alignment with the receiver, and are further attenuated by the reflection losses, would not be able to replace its direct beam, which is received with the full intensity of 100%.

The description which will be given hereinbelow solely for the purpose of illustration, but not limitation, will be supported by the drawings on the attached plate, these drawings being merely indicative but capable of providing a better understanding of such description.

An object of the present invention is to overcome the limitations and the disadvantages illustrated hereinabove of the prior art.

The barrier forming the subject of the present invention does, for this reason, adopt the system of automatic calibration illustrated hereinbelow, this being equipped with an automatic system which regulates the irradiated power to the lower trigger limit, this being an automatic system which is not provided on the ordinary standard barriers which have been marketed up to the present time.

Another object of the present invention is to eliminate the need to have to know, in advance in the factory, the distance at which the end user will instal the section TX from the section RX, the automatic calibration being effected when the installation has already been completed, in the course of the first activation.

The intangible barrier forming the subject of the present invention provides for the regulation of the power irradiated by the section TX which can be effected by means of a stepping digital potentiometer driven by electrical pulses in a number proportional to the desired power, which pulses are generated by a control circuit which we shall call the "automatic regulating system" and which will be described in greater detail hereinbelow.

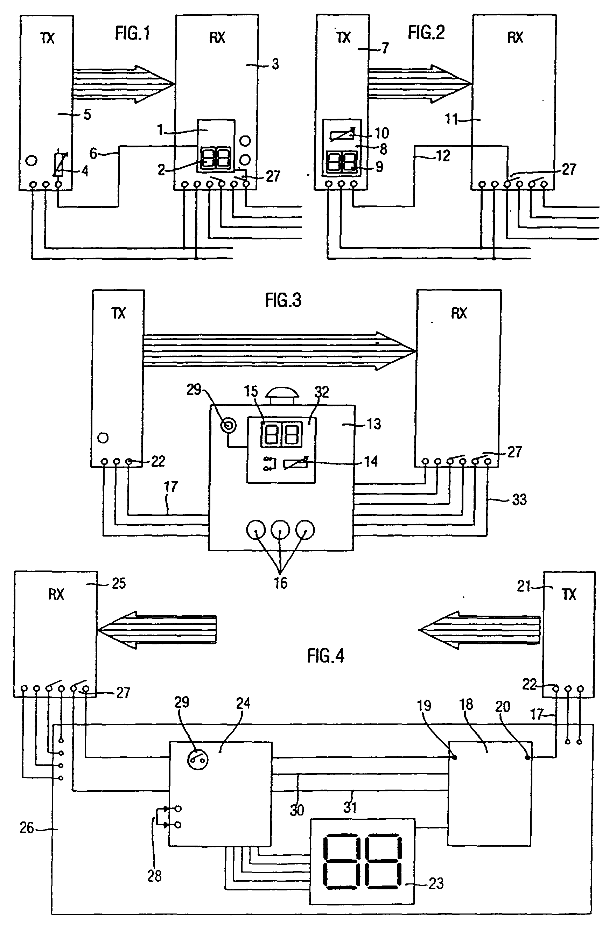

The plate of drawings which is appended for the sole purpose of illustration but not of limitation shows in Figure 1 the scheme of the interconnection between the transmitter TX and the receiver RX when, in accordance with mechanooptical requirements, the receiver may also contain in the construction thereof the card of the circuit of the automatic calibration system;
Figure 2 illustrates the scheme of the interconnections when the automatic calibration system can be inserted in the transmitting section;
Figure 3 shows the scheme of the interconnections when all the components are included in an external central unit;
Figure 4 shows the block diagram of the circuit constituting the true and proper automatic calibration system included in a central unit 1.

In Figure 1, the complete automatic regulating system 1 along with its numerical display 2, is appropriately installed within the section RX 3 of the barrier, because this is required to detect the logic output states which are necessary to be able to control the digital potentiometer 4, which potentiometer, in contrast, can more appropriately be inserted in the section of the transmitter TX 5 as this contains all the radiators which the potentiometer has to regulate.

The data supplied by the regulator 1 have to be transmitted to the digital potentiometer 4 via a multiple supplementary conductor 6 which was not necessary in the case of a TX with manual regulation of the preceding types of barriers.

Figure 2 illustrates a second system which is more advantageous since the section of the transmitter 7 of each barrier, being simpler both conceptually and in terms of the number of components, is better disposed to contain both the automatic calibration system 8, complete with numerical display 9 (which can be omitted, as it is not essential to the procedure) and also the stepping digital regulator 10. The assembly needs to receive from the receiver section 11 only the datum of the logic state of one of its outputs, via a single conductor 12 and not a multiple conductor 6 as in the case of Figure 1.

Figure 3 illustrates the case of barriers which have already been designed without the possibility of incorporating other circuits, which is the most common case in practical use, and where the electronic apparatus for self-calibration 32 included in the present invention can advantageously be incorporated in the central unit 13 which is installed outside the two sections TX and RX. Usually, this central unit is already in existence as it is also dedicated to other accessory services, such as the warning lights 16, the stabilized power supply, the comparison of the logic states etc.

The electronic apparatus to be added in this case is appropriately constituted by a single assembly also containing the digital potentiometer 14 and the numerical display 15. On this central unit 13 there is fitted the push button 29 which can be used for the "RESET" (or repositioning to zero) function, which will be better illustrated hereinbelow.

The section TX is equipped with a terminal 22 for the supplementary connection 17 which transmits the regulated control voltage. By adopting this solution, barriers which have already been constructed without such service may also become self-regulable. In other words, the section RX of the barriers which have been constructed without provision for being coupled to a self-controlled section TX retain their construction unchanged. This is because, for the automatic regulating system 32 it is sufficient to know the "closed" and "open" logic states of the final control switch 27 of its RX, and it is informed of these via the connection 33 which is already in existence, while for despatch to the section TX of the regulating system it is necessary to add the single conductor 17 and a linking terminal 22.

Figure 4 reproduces the general block diagram of the invention. In addition to the section RX (unchanged) and TX carrying a further terminal 22, the central unit 26 is illustrated, in which the added components are indicated.

The automatic digital potentiometer 18 is constituted by a small integrated component, substantially equivalent to a resistance potentiometer, and can be found on the conventional market. In place of the rotational pivot for the regulation of the wiper this potentiometer has a rheophore 19 to which there are passed the control pulses for the variation of the voltage which is to be supplied by the latter to the rheophore 20.

The potentiometric range is divided, for example, into 31 steps, one for each pulse, and, if the maximum voltage were 5 volt, the variation of 5/31 = 0.16 volt would be obtained for each pulse.

The section TX 21 of the barrier forming the subject of the present invention having originally been equipped with the regulating circuit for the irradiated power involving a similar potentiometer which is regulable manually, its general circuit will be prepared simply without such potentiometer and at the regulation point 22, there will be connected the conductor originating from the rheophore 20 of the digital potentiometer 18.

The operational system and the conformation of the transmitting section of a barrier of the regulable irradiated power type is already known.

The digital potentiometer 18 is appropriately coupled to a light-emitting numerical display unit 23 which indicates the position of the virtual index in the form of a number of jumps from zero to the maximum. For a potentiometer having for example 31 jumps, it is sufficient that this potentiometer indicates the step in which it is found at any instant from zero to 31. Thus, it is appropriate for the correct management of the barrier to be able to read the calibration point which the latter has assumed and which we shall call the "calibration number".

Once determined, and in the absence of other pulses, the calibration number which has been reached remains always at this level, as if it had been stored.

The automatic calibration system 24 is an electronic circuit constituted by normal components: resistors, capacitors, transistors, integrated logic units, timers, operational amplifiers, comparators, etc. which effects the execution of the same manual calibration operation which is normally executed by the human operator, in the factory, for the distance at which the transmitter TX 21 will be with respect to the receiver RX 25. However, the operations in this case are executed after completion of the installation of the two sections TX and RX on the machine to be protected, which sections have already been fixed and optically oriented in optimal fashion.

The consequential operations of self calibration are:
A) Upon activation of the barrier pair 21 - 25 (usually via the common central unit 26), the automatic system 24 will supply, in a very short period of time, the datum for the maximum irradiated power, through which the receiver will, in the absence of obstacles, place the output in the "closed" condition, i.e. the authorization for the movement of machine will be granted; the calibration number which will appear will be 31, i.e. the maximum;
B) the automatic system will immediately start to jump one step after another, until it reaches the calibration number corresponding to the limit of subsistence of the range of the transmitter 21 for that given distance between TX and RX, for example until it reaches the number 15. In fact, at that point the output 27 of the receiver RX 25 has passed to the "open" condition, and the authorization for the movement of the machine is denied.
   The order to the automatic system 24 to stop the reduction of the output power was passed from the section RX 25 at the instant of opening of its control output 27 by reason of insufficiency of power for that range;
C) at this point, the automatic system 24 starts to cause the imaginary wiper of the digital potentiometer to jump by a number of steps which has been determined by means of appropriate values of the components. From practical use, an inference has been made of the appropriateness of the number of two increment steps for the calibration number, as a result of which the latter will jump to 15 + 2 = 17 and will remain fixed at this datum, the RX having returned to a state of authorization even though very close (2 steps) to the limit of the "alarm" condition;
D) a short circuit bridge 28 within the automatic system makes it possible, by means of its interruption, to increase by some predetermined further steps the calibration number which has been automatically obtained.

This last operation proves to be essential when, in the phase of normal operation, it is found that the vibrations which cannot be eliminated of the operational machine are of such large magnitude as to succeed in varying at some instant the alignment of the optical systems, so as to cause inopportune stoppages of the machine.

Upon each reactivation of the machinery, the automatic calibration system 24 + 18 + 23 will repeat its cycle of variation which has just been described, to set itself at all times at the threshold of the trigger point.

If some variations of the ambient situation were to occur by chance (for example a fortuitous disalignment or a reduction in transparency of the optical systems, etc.) the automatic system will adapt, on the occasion of the next activation, to the new trigger limit, for example to the calibration number 20 rather than 17 as previously. Such variation of the calibration number also serves as a useful warning regarding the need to clean the optical systems or to recheck the orientation of the two sections TX - RX.

A further control device 29, accessible from the outside, in the form of a push button, effects the "reset" action, that is to say the action of commencing once again from zero the entire calibration operation (which has a very short duration cycle) and serves to check and to select the best position of the optical orientation, to which the lowest possible calibration number must correspond. It becomes possible to select the best orientation after having effected a number of self-calibration repetitions for slight displacements of the mechanical support system of the barriers.

The connections 30 and 31 transmit the control of the direction of variation, by way of increase and by way of decrease respectively, of the calibration number.

## Claims

1. Optoelectronic intangible barrier with automatic regulation of the trigger threshold, comprising at least one transmitting bar TX containing one or a plurality of emitters or radiators of beams of infrared rays, and at least one second receiving bar RX containing one or a plurality of receivers as electrooptical sensors which are capable of receiving the infrared rays so as to create a screen of rays capable of detecting the crossing thereof by bodies opaque to its rays and further comprising an automatic system (24) for calibrating the quantity of power irradiated by the unit Tx as a function of predetermined parameters;
characterized in that said automatic system executes the calibration of the power, using a digital potentiometer, setting the power, as a function of the installation distance between TX and RX, in proximity to the trigger threshold of the "halt machine" alarm as soon as the range of the barrier proves to be insufficient, and in that said automatic system is accommodated, where this is provided in the design phase, in the transmitter TX or in the receiver RX, or in divided fashion in both; or, where this is not provided, in an external third section (13)-(26) which is electrically connected to these and which is essential to these for operation with a type 4 degree of security.

2. Optoelectronic intangible barrier with automatic regulation of the trigger threshold according to Claim 1, characterized in that an automatic regulating system (12)-(24) is constituted by an assembly of known components of conventional use in electronic logic circuits, which are connected inter se in such a manner as to supply a sequence of pulses which follow one another, from the moment of the activation thereof to the end of the logic sequence, always in the same manner as well for each reactivation subsequent to the first one and the number of which is determined by timers activated by the warning signal originating from one of the output and control switches of the receiving section RX.

3. Intangible barrier according to Claims 1 and 2, characterized in that an automatic regulating system (24) causes, by means of electrical pulses generated and transmitted by the latter, the step by step variation of a digital potentiometer (18) the voltage of which present at its output (20) is incremented or decremented by one step for each pulse in accordance with a message which arrives via the connector 30 or 31, said voltage variations causing a corresponding variation of the power emitted by the radiators of the section TX.

4. Intangible barrier according to the preceding claims, characterized in that a display device (23) for luminous numbers, which is synchronous with the step by step variations which take place in the digital potentiometer (18), indicates the precise voltage transferred by it to the power control of the radiators or, more advantageously, indicates the number corresponding to the steps executed by its "virtual wiper" from zero to the maximum, this being a number which will be called the "calibration number".

5. Intangible barrier according to the preceding claims, characterized in that at the time of the activation of the entire assembly, its automatic regulating system (24) in parallel with its numerical indicator (23) brings the value of the calibration number corresponding thereto, within a period of a few seconds, to a power of only two steps greater than that applicable to the limit range between TX and RX which is indicated by the switch (27) of the section RX; said value being regulated by a digital potentiometer connected to RX by means of a supplementary conductor (17) and said value remaining therein in a definitive manner as desired, also for the subsequent activations in the manner specified in the design phase.

6. Intangible barrier according to the preceding claims, characterized in that, failing reception, throughout the range, from the receiver RX of any authorization message caused by the closing of its output switch (27), said voltage and the pertinent calibration number are set permanently to the maximum value, to await a following calibration cycle which will commence upon closing of said switch.

7. Intangible barrier according to the preceding claims, characterized in that a connecting bridge (28) connected to the automatic regulating system (24) makes it possible, by being interrupted, to increase by some predetermined further steps the calibration number which has been obtained automatically in order to prevent any possible inopportune alarms due to excessive vibrations of the machinery which cannot be eliminated.

8. Intangible barrier according to the preceding claims, characterized in that it possesses, on the automatic-system section or at any point capable of conveniently being controlled from outside, a "RESET" control push button, that is to say a push button capable of causing the entire calibration operation to proceed again from zero, which operation is carried out in a very short time, for the purpose of selecting, by means of a number of repetitions of the operation, the lowest possible calibration number, so to speak the lowest possible emission power, correcting the parallelism and the orientation of the two sections TX and RX (8).
